# EUROPEAN PATENT SPECIFICATION

(11) **EP 1 316 736 B1**
(45) Date of publication and mention of the grant of the patent: **25.04.2007**
(21) Application number: 02025910.7
(22) Date of filing: 20.11.2002
(51) Int. Cl.: F16C 33/78

(54) **Sealing means for a rolling contact bearing**
Dichtungsvorrichtung für ein Wälzlager
Moyens d'étanchéité pour un palier à contact de roulement

(30) Priority: 30.11.2001 IT TO20011122
(43) Date of publication of application: 04.06.2003
(73) Proprietor: SKF INDUSTRIE S.p.A., 10121 Torino (IT)
(72) Inventor: Gallucci, Francesco, 10042 Nichelino, (Torino) (IT)
(74) Representative: Lotti, Giorgio

(56) References cited:
- WO-A-01/20184
- US-A- 4 384 387
- PATENT ABSTRACTS OF JAPAN vol. 1999, no. 13, 30 November 1999 (1999-11-30) -& JP 11 230179 A (NIPPON SEIKO KK), 27 August 1999 (1999-08-27)
- PATENT ABSTRACTS OF JAPAN vol. 1997, no. 11, 28 November 1997 (1997-11-28) -& JP 09 196066 A (NIPPON SEIKO KK), 29 July 1997 (1997-07-29)

## Description

The present invention refers to a contact rolling bearing.

In general, rolling contact bearings of a well-known type comprise an outer race, an inner race which is co-axial to the outer race, a series of rolling bodies which are arranged between the two races, and two sealing coverings which are arranged on either side of the rolling bodies and between the two races in order to prevent any impurities or suchlike from entering inside the rolling contact bearing itself. Document WO 01/20184 discloses such a sealed roller bearing and it is considered the closest prior art.

In some kinds of applications, the type of rolling contact bearing described above is mounted together with at least one extra shield, which is defined by a race which is arranged laterally to a covering of the rolling contact bearing, and which is suitable for increasing the sealing characteristics of the rolling contact bearings themselves.

Usually, this extra shield is independent of the rolling contact bearing and is subsequently blocked onto the rolling contact bearing itself during the assembly phase, but the fact of its presence is the source of several disadvantages, for example, a prolongation of the assembly time, and an increase in management and production costs, above all in the case that the rolling contact bearing and the extra shield come from two different suppliers.

The aim of the present invention is to produce a rolling contact bearing which is free of the above-described disadvantages.

According to the present invention, a rolling contact bearing will be produced comprising an outer race, an inner race which is co-axial to the outer race, a series of rolling bodies and which are arranged between the two races, and at least one sealing covering which is laterally arranged to the rolling bodies and between the two races; the rolling contact bearing is characterised by the fact that it also comprises at least one extra shield which is integral to the inner race and which is laterally arranged to the said sealing covering in order to increase the sealing capacity of the sealing covering itself.

The present invention will now be described with reference to the attached drawings, which illustrate a non-limiting form of embodiment of the present invention, and in which;
- FIGURE 1 illustrates, in transverse section, a preferred form of embodiment of the rolling contact bearing to which the present invention refers; and
- FIGURE 2 illustrates a detail of FIGURE 1 on an enlarged scale.

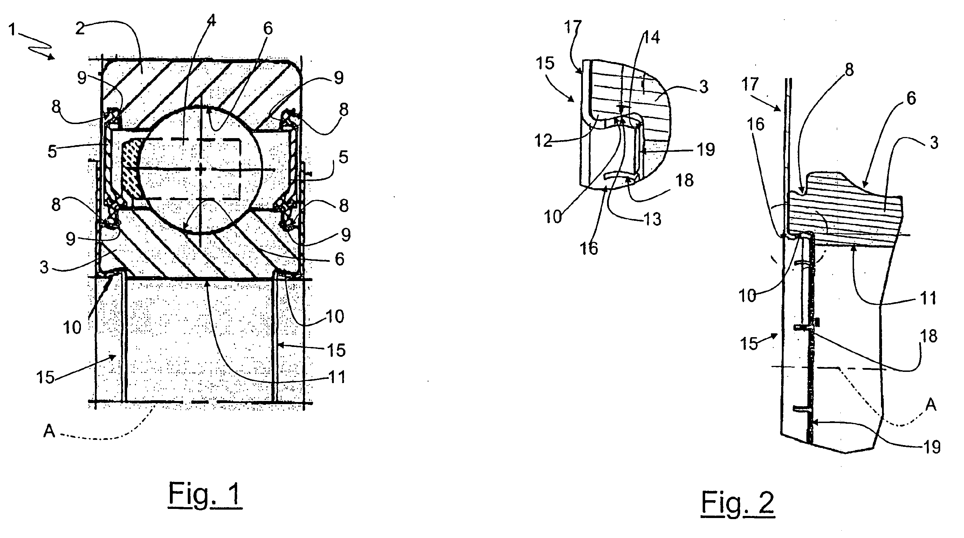

With reference to FIGURE 1, the number 1 indicates a rolling contact bearing in its entirety, presenting a rotation axis A and comprising an outer race 2, an inner race 3 which is co-axial to the outer race 2, a series of rolling bodies which are arranged between the two races 2 and 3, and two sealing coverings 5 which are arranged between the two races 2 and 3 themselves and which are arranged laterally to the rolling bodies 4 and transversally to the axis A.

From the part which is turned towards the rolling bodies 4, both the outer race 2 and the inner race 3 each present a respective sliding track 6 for the rolling bodies 4 themselves, and also present two respective annular notches 8, which are arranged on opposite sides of the relative track 6 and which are suitable for housing a respective edge 9 of the relative sealing covering 5.

The inner race 3 also presents, on the part which is opposite the relative track 6, two grooved housings 10 which are obtained in the place of inner corners of the inner race 3 itself, and which present a radial width which increases axially starting from the outside.

According to the illustration which is shown in FIGURE 2, the inner race 3 is radially delimited towards the axis A by a cylindrical surface 11, and each housing 10 presents an external rounded annular sharp edge 12 which has an internal diameter which is less than an internal diameter of the cylindrical surface 11 itself. Furthermore, each housing 10 is radially delimited towards the outside by a surface 13 in the form of a tapering cone which is connected to the relative sharp edge 12, and which is axially delimited towards the inside by a flat surface 14 which is transverse to the axis A and which is, in turn, connected to the relative surface 13.

The rolling contact bearing 1 also comprises, for each sealing covering 5, an extra protection shield 15, which is arranged laterally to the relative sealing covering 5 in order to increase the sealing capacity of the covering 5 itself, and which is integral to the inner race 3.

In particular, each shield 15 comprises an assembly portion 16 which is arranged inside the housing 10, and a covering portion 17, which extends radially beyond the track 6 from the inner race 3 and which is arranged laterally to the relative covering 5.

The portion 17 is defined by an annular plate, which is arranged transversally to the axis A and which is radially superimposed over the relative sealing covering 5 for at least half of the radial height of the covering 5 itself.

The assembly portion 16, on the other hand, can be directly caulked inside the housing 10, or as an alternative, as illustrated, it may present a conformation which is substantially similar to that of the housing 10 n order to be snap inserted inside the housing 10 itself.

With this aim in mind, and in order to increase its flexibility, the assembly portion 16 is provided with a number of weakening notches 18, which are arranged at an equal distance one from the other, and which are obtained starting from a free edge 19 of the assembly portion 16 itself, and which define a number of other grooved tongues.

It is intended that the present invention should not be limited to the forms of embodiment which are herein described and illustrated, which are to be considered as examples of preferred forms of embodiment of a blocking device, which might be subject to further modifications relating to the shape and arrangement of its parts, as well as to details pertaining to its construction and assembly.

## Claims

1. Rolling contact bearing (1) which comprises:
- an outer race (2);
- an inner race (3) which is co-axial to the outer race (2) and presents a sliding track (6) and a grooved housing (10) which is obtained in the place of an internal corner of the inner race (3) on the opposite side of the track (6);
- a series of rolling bodies (4) which are arranged between the two races (2, 3) along the track (6);
- at least one sealing covering (5) which is laterally arranged to the rolling bodies (4) and between the two races (2, 3); and
- at least one extra shield (15) which is laterally arranged to the said sealing covering (5) and which in turn comprises an assembly portion (16) mounted inside the grooved housing (10), and a covering portion (17) which extends radially beyond the sliding track (6) and laterally beyond the said sealing covering (5) in order to increase the sealing capacity of the sealing covering (5) itself;
the rolling contact bearing (1) is **characterised by** the fact that the grooved housing (10) presents a radial width which increases axially starting from the outside and in that the assembly portion (16) is caulked inside the grooved housing (10).

2. Rolling contact bearing according to Claim 1, **characterised by** the fact that the assembly portion (16) presents a shape which is substantially similar to that of the grooved housing (10) and is provided with a number of weakening notches (18) which are equally spaced in relation to each other in order to ensure that the assembly portion (16) is provided with a determined elasticity.

3. Rolling contact bearing according to any of the preceding Claims, **characterised by** the fact that it comprises two extra shields (15) which are mounted on the inner race (3) and which are arranged laterally to the two sealing coverings (5) in order to increase the sealing capacity of the coverings (5) themselves.

## Patentansprüche

1. Wälzlager (1), umfassend:
- ein äußeres Kugellager (2);
- ein inneres Kugellager (3), das koaxial zum äußeren Kugellager (2) angeordnet ist und eine Gleitschiene (6) sowie ein gerilltes Gehäuse (10) aufweist, das an der Stelle einer internen Ecke des inneren Kugellagers (3) auf der gegenüberliegenden Seite der Schiene (6) erhalten wird;
- eine Reihe von Rollkörpern (4), die zwischen den beiden Kugellagern (2, 3) entlang der Schiene (6) angeordnet sind;
- wenigstens eine Verschlussabdeckung (5), die seitlich zu den Rollkörpern (4) und zwischen den beiden Kugellagern (2, 3) angeordnet ist; und
- wenigstens eine zusätzliche Abschirmung (15), die seitlich zu der Verschlussabdeckung (5) angeordnet ist und die wiederum ein Einbauteil (16) umfasst, das im Innern des gerillten Gehäuses (10) befestigt ist, und ein Abdeckteil (17), das sich radial über die Gleitschiene (6) hinaus und lateral über die Verschlussabdeckung (5) hinaus erstreckt, um die Dichtfähigkeit der Verschlussabdeckung (5) selbst zu erhöhen;
wobei das Wälzlager (1) **dadurch gekennzeichnet ist, dass** das gerillte Gehäuse (10) eine radiale Breite aufweist, die beginnend von der Außenseite axial zunimmt, und dass das Einbauteil (16) im Innern des gerillten Gehäuses (10) abgedichtet ist.

2. Wälzlager nach Anspruch 1, **dadurch gekennzeichnet, dass** das Einbauteil (16) eine Form aufweist, die im Wesentlichen der des gerillten Gehäuses (10) ähnelt, und mit einer Reihe von Abschwächungskerben (18) versehen ist, die im Verhältnis zueinander gleichmäßig beabstandet sind um sicherzustellen, dass das Einbauteil (16) mit einer festgelegten Elastizität versehen ist.

3. Wälzlager nach einem der vorangehenden Ansprüche, **dadurch gekennzeichnet, dass** es zwei zusätzliche Abschirmungen (15) umfasst, die an dem inneren Kugellager (3) befestigt sind und die seitlich zu den beiden Verschlussabdeckungen (5) angeordnet sind, um die Dichtfähigkeit der Abdeckungen (5) selbst zu erhöhen.

## Revendications

1. Palier à contact de roulement (1) comprenant :
- une bague extérieure (2) ;
- une bague intérieure (3) coaxiale à la bague extérieure (2) et présentant un chemin de roulement coulissant (6) et un logement rainuré (10) obtenu à la place d'un coin interne de la bague intérieure (3) sur le côté opposé du chemin de roulement (6).
- une série d'enroulements (4) agencés entre les deux bagues (2, 3) le long du chemin de roulement (6) ;
- au moins un revêtement étanche (5) disposé latéralement par rapport aux enroulements (4) et entre les deux bagues (2, 3) ; et
- au moins un blindage supplémentaire (15) qui est disposé latéralement par rapport audit revêtement étanche (5) et qui comprend à son tour un tronçon d'assemblage (16) monté à l'intérieur du logement rainuré (10) et un tronçon de revêtement (17) qui s'étend radialement au-delà du chemin de roulement coulissant (6) et latéralement au-delà dudit revêtement étanche (5) afin d'augmenter la capacité d'étanchéité du revêtement étanche (5) lui-même ; le palier à contact de roulement (1) est **caractérisé en ce que** le logement rainuré (10) présente une largeur radiale qui augmente axialement à partir de l'extérieur et **en ce que** le tronçon d'assemblage (16) est calfaté à l'intérieur du logement rainuré (10).

2. Palier à contact de roulement selon la revendication 1, **caractérisé en ce que** le tronçon d'assemblage (16) présente une forme qui est sensiblement similaire à celle du logement rainuré (10) et est équipé d'un certain nombre d'encoches de fragilisation (18) qui sont espacées de manière homogène les unes par rapport aux autres afin de garantir que le tronçon d'assemblage (16) est doté d'une élasticité déterminée.

3. Palier à contact de roulement selon l'une quelconque des revendications précédentes, **caractérisé en ce qu'**il comprend deux blindages supplémentaires (15) montés sur la bague intérieure (3) et disposés latéralement par rapport aux deux revêtements étanches (5) afin d'augmenter la capacité d'étanchéité des revêtements (5) eux-mêmes.
